# EUROPÄISCHE PATENTSCHRIFT

(11) **EP 2 335 898 B1**
(45) Veröffentlichungstag und Bekanntmachung des Hinweises auf die Patenterteilung: **17.01.2024**
(21) Anmeldenummer: 10014789.1
(22) Anmeldetag: 19.11.2010
(51) Int. Cl.: B29C 48/435, B29C 48/56, B29C 48/565, B29C 48/645, B29C 48/685, B29C 48/80, B29C 48/44, B29C 48/60, B29B 7/48, B30B 11/24

(54) **Planetwalzenextruder**
Planetary-gear extruder
Extrudeuse planétaire

(30) Priorität: 20.12.2009 DE 102009059912
(43) Veröffentlichungstag der Anmeldung: 22.06.2011
(73) Patentinhaber: Entex Rust & Mitschke GmbH, 44805 Bochum (DE)
(72) Erfinder: Rust, Harald, 44805 Bochum (DE)
(74) Vertreter: Kaewert, Klaus

(56) Entgegenhaltungen:
- EP-A1- 1 533 101
- EP-A2- 0 340 407
- EP-A2- 1 844 917
- EP-A2- 1 997 608
- DE-A1- 4 308 098
- US-A- 3 913 897

## Beschreibung

Die Erfindung betrifft einen Planetwalzenextruder .

Planetwalzenextruder besitzen eine Zentralspindel und umlaufenden Planetspindeln sowie einer außen angeordneten Buchse oder dergleichen, wobei die Zentralspindel mit Zähnen versehen ist und in Eingriff mit Zähnen der Planetspindeln steht und die Zähne der Planetspindeln in Eingriff mit einer Innenverzahnung der Buchse stehen. Die Verzahnung verläuft gewendelt auf der Zentralspindel und auf den Planetspindeln außen.

Die Verzahnung der Buchse verläuft gewendelt innen.

Das Maß der Wendelung wird als Steigung bezeichnet.

Außerdem wird bei der Wendelung zwischen Rechtsgängigkeit und Linksgängigkeit unterschieden.

Üblicherweise wird die Zentralspindel angetrieben, während die umgebende Buchse ortsfest angeordnet ist. Dadurch werden die Planetspindeln von der Zentralspindel mitbewegt.

Die innen verzahnte Buchse ist fest im Extrudergehäuse angeordnet.

Der Planetwalzenextruder hat mit anderen Extrudern gemeinsam, dass er am einen Ende mit einer Materialeinspeisung versehen ist und am anderen Ende den Materialaustritt besitzt. Zwischen Ein- und Austritt können zusätzliche Materialien eingespeist werden.

Zwischen Ein- und Austritt wirken die Zentralspindel, die Planetspindeln und die Buchse auf das Einsatzmaterial. Je nach Wunsch kann festes Kunststoffgranulat dadurch plastifiziert und aufgeschmolzen und/oder Mischungsanteile in der Schmelze dispergiert und/oder die Schmelze homogenisiert und/oder die Schmelze gekühlt werden. Darüber hinaus kann der Extruder noch andere Aufgaben erfüllen.

Bei allen Planetwalzenextrudern ist bekannt, dass sie unterschiedliche Aufgaben erfüllen können. Die Planetwalzenextruder können das zu Material einziehen und/oder komprimieren und/oder aufschmelzen und/oder dispergieren und/oder homogenisieren und/oder kühlen und/oder durch eine Düse auspressen. Daneben kommen noch andere Aufgaben in Betracht.

Wahlweise werden verschiedene Extruder miteinander kombiniert. Zum Beispiel erfolgt das in einer Kaskadenbauart oder in Form eines Hauptextruders mit einem Seitenarmextruder. Zumeist kommen Mischformen vor, bei denen in einem Extruder mehrere Teile unterschiedlicher Bauart miteinander kombiniert werden, z.Beispiel Planetwalzenteile mit Einschneckenteilen oder Planetwalzenteilen mit Doppelschneckenteilen.

Im weiteren wird nur von Planetwalzenextrudern gesprochen. Das schließt die Planetwalzenteile und deren Kombination mit Extruderteilen anderer Bauart ein. Vorzugsweise besitzt ein Planetwalzenextruder ein Füllteil, das die Bauart eines Einschneckenextruders aufweist. Dabei läuft eine Schnecke in einem zylindrischen Gehäuse um. Das Einsatzmaterial wird in das Füllteil aufgegeben und dort verdichtet und unter Wärmeeinwirkung und Druck plastifiziert. Die entstehende Schmelze wird in nachgeschaltete Extruderabschnitte übergeben, welche die Bauart von Planetwalzenextrudern haben.

Bei durchgehender Verzahnung benötigt das Einsatzmaterial eine von der Verzahnung und von der Drehzahl der Spindeln abhängige Zeit für den Weg vom Eintritt bis zum Austritt.

Aus der DE 4308098 A1 ist es bekannt, Planetspindeln mit einer Igelverzahnung zu verwenden. Die Igelverzahnung entsteht, wenn in die Verzahnung Lücken eingearbeitet werden. Unterbrechungen der Verzahnung sind schon aus der DE2257007 A1 bekannt.

Die Lücken entstehen durch ringförmige Ausfräsungen.

Die Igelverzahnung hat sich bewährt.

Gleichwohl sind Noppenspindeln entwickelt worden, wie sie in der EP 1533101 beschrieben sind.

Diese Entwicklung geht davon aus, dass die Verzahnung in die Rohlinge der Planetspindeln gefräst wird. Es gibt noch andere Methoden zur Herstellung der Verzahnung. Dazu gehören Drehen, Schleifen, Funkenerosion.

Nach der älteren Entwicklung wird in die verzahnten Planetspindeln zusätzlich noch eine gegenläufige Verzahnung versehen. Das heißt, in die rechtsgängig verzahnten Planetspindeln wird zur Erzeugung der neuen Verzahnung zusätzlich eine linksgänge Verzahnung eingearbeitet.

In die linksgängig verzahnten Planetspindeln wird zur Erzeugung neuen linksgängigen Verzahnung zusätzlich eine rechtsgängige Verzahnung eingearbeitet.

Das geschieht an sogenannten Drehbänken, die in jeder Drehrichtung unter gleichzeitige Bewegung des Schneidkopfes in der einen oder anderen axialen Richtung schneiden können. Je nach Beschaffenheit der gewählten Verzahnung kann dabei die Anwendung eines Fräswerkzeuges als Schneidwerkzeug erforderlich werden.

Vorteilhafterweise entsteht durch gegenläufige Verzahnung eine besondere Anordnung der Zähne. Die Zähne erscheinen wie gleichmäßig verteilte Noppen an den Planetspindeln. Während bei der bekannten Igelverzahnung ringförmige, quer zur spindellängsrichtung verlaufende Ausnehmungen entstehen, in denen von der Verzahnung keine Kräfte auf eine durch den Extruder strömende Schmelze ausgeübt wird bzw. nur Kräfte aus der bisherigen Schmelzeströmung und aus nachströmender Schmelze auftreten, ist das bei der neuen Noppen-Verzahnung anders. In Umfangsrichtung liegt hinter jeder Zahnlücke ein anderer Zahn, so dass keine vergleichbaren Ausnehmungen wie bisher entstehen.

Dadurch entfalten die neuen Planetspindeln auf der ganzen Länge eine gleichmäßige Wirkung.

Die gegenläufige Verzahnung beeinträchtigt das Zusammenwirken der Planetspindeln mit der Zentralspindel und der innen verzahnten Buchse nicht, weil Planetspindelzähne durch die gegenläufige Verzahnung lediglich Ausnehmen erfahren bzw. die stehen bleibenden Zahnteile unverändert in die Verzahnung der Zentralspindel und der Buchse greifen.

Die übliche Verzahnung hat eine Neigung bis 45 Grad. Die Verzahnung kann aber auch davon abweichen.

Vorzugsweise wird eine gegenläufige Verzahnung mit einer anderen Neigung als die übliche Verzahnung eingearbeitet. Die Neigung kann geringer oder größer sein. Der Unterschied zwischen der rechtsgängigen und der linksgängigen Verzahnung beträgt vorzugsweise bis 15 Grad, noch weiter bevorzugt bis 5 Grad.

Vorzugsweise beträgt der Steigungsunterschied mindestens 1 Grad.

Die unterschiedliche Neigung hat vorteilhafte Wirkungen. Insbesondere wird die Schmelze dadurch besser gelenkt.

Wahlweise wird auch die gegenläufige Verzahnung mit einer anderen Tiefe gearbeitet. Der Unterschied zwischen der Tiefe linksgängiger und der Tiefe rechtsgängiger Verzahnung wird vorzugsweise in Prozenten von der ursprünglichen Verzahnung angegeben. Bei 0% hat die gegenläufig eingeschnittene Verzahnung die gleiche Tiefe wie die ursprüngliche Verzahnung. Bei -10% hat die gegenläufig eingeschnittene Verzahnung eine um 10% geringere Tiefe als die ursprünglich eingeschnittene Verzahnung. Bei -90% hat die gegenläufig eingeschnittene Verzahnung eine um 90% geringere Tiefe als die ursprünglich eingeschnittene Verzahnung. Entsprechendes gilt bei -80% usw.

Vorzugsweise beträgt die Tiefe der gegenläufig eingeschnittenen Verzahnung mindestens -10%.

Bei +10% hat die gegenläufig eingeschnittene Verzahnung eine um 10% größere Tiefe als die ursprünglich eingeschnittene Verzahnung. Bei +20% hat die gegenläufig eingeschnittene Verzahnung eine um 20% größere Tiefe als die ursprünglich eingeschnittene Verzahnung. Entsprechendes gilt für +30 usw.

Die Vergrößerung der Verzahnungstiefe findet ihre Grenze in der notwendigen Festigkeit der stehenden bleibenden Teile der ursprünglichen Verzahnung. Die notwendige Festigkeit ist auch von der Belastung der Verzahnung abhängig, die sich erst aus dem jeweiligen Anwendungsfall ergibt. Die notwendige Festigkeit kann wahlweise mit einem oder wenigen Versuchen bestimmt werden.

Obiges gilt für Verzahnungsmodule 1 bis 25.

Vorzugsweise findet bei der neuen Verzahnung der Planetenspindeln eine Evolventenverzahnung sowohl für die ursprüngliche Verzahnung als auch für die gegenläufige Verzahnung Anwendung. In Betracht kommt aber auch eine andere Verzahnungsart. Dabei kann jede Verzahnungsart Anwendung finden, die für Planetwalzenextruder, d.h. für das Ineinandergreifen der verzahnten Teile im Planetwalzenextruder geeignet ist. Wahlweise kann auch die Evolventenverzahnung mit einer anderen Verzahnungsart kombiniert werden. Dabei kann die herkömmliche Verzahnung eine Evolventenverzahnung und die gegenläufige andere Verzahnung eine andere Verzahnung sein oder umgekehrt. Die Anwendung gleicher Verzahnungsart für gegenläufige Verzahnungen hat den Vorteil einfacherer und wirtschaftlicher Herstellung. Es muss nämlich das Fräswerkzeug für die Herstellung der gegenläufigen Verzahnung nämlich dann nicht zwingend gewechselt werden. Ein weiterer Vorteil ist eine sehr günstige Noppenbildung.

Jeder Planetwalzenextruder wird mit einer Vielzahl von Planetspindeln betrieben.

Wahlweise können auch gegenläufig verzahnte Planetenspindeln mit herkömmlich verzahnten Planetenspindeln kombiniert werden.

Die Noppenspindeln haben im Unterschied zu anderen Spindeln überraschend günstige Ergebnisse bei schwierigen Werkstoffen wie zähelastischen bzw. zähplastischen Kunststoffen oder gleichermaßen im Extruder aufarbeitbaren Naturstoffen gezeigt.

Es wurde erkannt, dass die Noppenspindeln im Eingriffsbereich mit den anderen Extruderteilen nur eine reduzierte Berührungsfläche gegenüber herkömmlichen Planetspindeln aufweisen. Das führt zu einem stärken Flankendruck bei vergleichbaren Betriebsbedingungen und zu einem größeren Verschleiß.

Eine ähnliche Situation ist mit den nach einem älteren Vorschlag gemäß EP 6014516 entstandenen Transportspindeln gegeben.

Der ältere Vorschlag nach der EP6014516 hat eine weitere Möglichkeit zur Einflussnahme auf die Förderwirkung der Planetwalzenspindeln (auch Planetspindeln genannt) gefunden. Nach dem älteren Vorschlag der EP6014516 wird an mindestens einer Planetspindel mindestens ein Zahn entfernt, nachfolgend Zahnreduzierung genannt.

Vorteilhafterweise eröffnet der ältere Vorschlag mit der Zahnreduzierung neue und weitgehende Einflussmöglichkeiten auf das Behandlungsgut/Extrusionsgut im Extruder. Dies lässt sich nicht noch genug einschätzen, weil dabei diese Entwicklung in vorhandenen Systemen bleiben kann. Das heißt, es kann auf bekanntem Extruderdesign von Planetwalzenextrudern aufgebaut werden, so dass sich die Möglichkeit einer sparsamen Änderung vorhandener Planetwalzenextruder durch Auswechselung der Planetspindeln eröffnet.

Diese zahnreduzierten Planetspindeln sind auch Gegenstand der EP1997608A2 und der EP1844917A2. Dabei ist der EP1844917A2 auch eine Planetspindel zu entnehmen, die für die Anwendung auf die Trocknung von PET und zu der notwendigen Entgasung zu mehr als der Hälfte ihrer Länge mit einer gegenläufigen Verzahnung und im Übrigen mit einer herkömmlichen Verzahnung versehen ist. Dies ist jedoch nur papierner Stand der Technik geworden. Ein Hinweis auf die Reduzierung von Verschleiß mit herkömmlicher Verzahnung an den Planetspindelenden ist den Druckschriften nicht zu entnehmen.

Die Erfindung ist in Anspruch 1 definiert.

Soweit eine Vorratshaltung an Planetwalzenspindeln stattfindet und soweit eine Vergütung oder Härten oder sonstiges Behandeln zur Erhöhung der Verschleißfestigkeit der Zahnflächen vorgesehen ist, werden die Planetwalzenspindeln vorzugsweise ohne die Oberflächenbehandlung bevorratet, damit im nachhinein eine einfache Bearbeitung der Planetwalzenspindeln, z.B. durch Fräsen, möglich ist. Die Behandlung der Zahnflächen erfolgt nach der Bearbeitung.

Die Bearbeitung der Planetwalzenspindeln kann auf alle bekannten Zahnmodule Anwendung finden, insbesondere auf die gebräuchlichen Module 1,5 bis 12 oder darüber hinaus bis 20. Die Zahnmodule sind von den oben erwähnten Planetwalzenteilen/Modulen zu unterscheiden. Die Zahnmodule kennzeichnen die Größe der Zähne.

Die Planetwalzenabschnitte/Module werden mit den anderen Modulen zu dem jeweils gewünschten Extruder zusammen gesetzt. Die Modulbauweise ist mit einem Baukastensystem vergleichbar und in der Regel besonders wirtschaftlich.

Die verschiedenen Planetenteile (Zentralspindel/Planetspindeln/Innenverzahnung) eines Abschnittes/Moduls haben regelmäßig den gleichen Zahnmodul.

Wahlweise werden die Zähne nicht nachträglich entfernt, sondern findet eine Fertigung statt, bei der die Planetwalzenspindeln sofort in die Form gebracht werden, wie sie nach der oben beschriebenen Zahnentfernung entsteht.

Dazu ist zunächst darauf einzugehen, wie die Zähne bei herkömmlicher Verzahnung entstehen. Verbreitet ist die Herstellung durch Fräsen und Schleifen. Dazu wird die Kontur der Verzahnung festgelegt und der Fräser entlang der Kontur bewegt. Der Fräser arbeitet dabei verhältnismäßig grob, Deshalb ist anschließend eine Feinbearbeitung üblich, z.B. durch Schleifen bei außen verzahnten Teilen oder durch Honen oder erodieren bei innen verzahnten Teilen üblich. Es sind auch umformende Herstellungsverfahren für Getriebeteile bekannt, das sind Gießen und Sintern. Zu den umformenden Herstellungsverfahren zählt Schmieden, Pressen, Ziehen, Walzen, Stanzen).

Das Fräsen gehört zur spanenden Herstellung . Anders spanende Verfahren sind zum Beispiel Hobeln, Stoßen, Räumen, Schaben, Schleifen, Honen.

Allen Herstellungsverfahren für Verzahnungen ist gemeinsam, dass sie der festgelegten Kontur der Verzahnung folgen. Bei normaler Verzahnung wechselt ein Zahn mit einer Zahnlücke. Der Abstand zwischen zwei benachbarten Zähnen eines Teiles ist gleich.

Bei der Festlegung der Kontur kommt es auf die Verzahnung an. Die Verzahnung folgt den allgemeinen Erkenntnissen der Getriebetechnik
Man unterscheidet verschiedene Grundformen von Verzahnungen: Evolventenverzahnung, Zykloidenverzahnung und Treibstockverzahnung. Darüber hinaus gibt es diverse Sonderformen.

Bei Planetwalzenextrudern hat sich die Evolventenverzahnung durchgesetzt. Die Evolventenverzahnung mit vollem Zahnbesatz wird im Folgenden als Normalverzahnung bezeichnet.

Bei der Evolventenverzahnung werden die Flanken der Zähne des Zahnrades von Evolventen gebildet. Vorstellen kann man sich die Evolventen, wenn man sich den Zahnradgrundkreis als massiven Zylinder vorstellt., um den ein Faden gewickel ist. Wird dieser Faden nun abgewickelt, so beschreibt der straff gespannte Endpunkt des Fadens die Figur einer Evolvente. Alle Punkte auf dem Faden, welche den ganzzahligen vielfachen Abstand vom Endpunkt aufweisen, bewegen sich somit auf der Evolvente eines anderen Zahnes. Die Evolventenverzahnungen haben folgende Vorteile:
Die Flanken zweier in Eingriff befindlichen Zahnräder berühren sich immer, und in diesen Berührungspunkten haben sie stets die annähernd gleich Geschwindigkeit. Somit ist gewährleistet, dass die Übertragung der Drehbewegung reibungsarm erfolgt.

Gleichzeitig erlaubt die Evolventverzahnung die gleichmäßige Übertragung von Drehmomenten durch eine konstante Übersetzung.

Sie ist unempfindlich gegen das Verschieben der Achsen der Zahnräder (Achsabstandsunabhängigkeit)
Sie ist einfach in der Fertigung durch standardisierte geradlinige Werkzeuge.

Bei gleicher Geometrie des Werkzeuges sind Zahnräder mit unterschiedlicher Zähnezahl und unterschiedlicher Profilverschiebung frei kombinierbar.

Bei Planetwalzengetrieben ist man wie bei anderen Getrieben bemüht, mit möglichst geringem Spiel zwischen den Getriebeteilen zu arbeiten. Das Spiel kann bei der Festlegung der Kontur berücksichtigt werden

Bei üblicher Verzahnung folgt ein Zahn einer Zahnlücke und einer Zahnlücke ein Zahn, wobie die Zähne und die Zahnlücken gleich sind. Da die Zähne in die Zahnlücken greifen und die miteinander kämmenden/ineinander greifenden Getriebeteile die gleiche Verzahnung haben sollen, beinhalten die Zahnlücken eine spiegelverkehrte Abbildung der Zähne.

Günstig ist es, wenn die Zahl der Zähne von Gehäuseinnenverzahnung(Buchsenverzahnung), Planetspindeln und Zentralspindel so gewählt ist, dass der Selbstreinigungseffekt der Planetwalzenteile gewahrt bleibt. Das ist zum Beispiel dann der Fall, wenn die Zähnezahl an der Zentralspindel und an der Gehäuseinnenverzahnung(Buchsenverzahnung) gerade ist und die Zähnezahl an den Planetspindeln ungerade ist. Dann wird die Schmelze in jedem Zwischenraum zwischen zwei Zähnen durch die in den Zwischenraum eindringenden Zähne anderer Teile des Planetwalzenextruders in Bewegung gebracht.

Die gleichen Verhältnisse ergeben sich bei ungeraden Zähnezahlen der Zentralspindel und Gehäuseinnenverzahnung und gerader Zähnezahl an den Planetwalzenspindeln.

Bei der Verwendung von Noppenspindeln ergibt sich gegenüber herkömmlich verzahnten Planetspindeln ein erkennbarer Mehrverschleiß.

Die Erfindung hat sich die Aufgabe gestellt, den Verschleiß zu reduzieren.

Nach der Erfindung wird das mit den Merkmalen des geltenden Hauptanspruches erreicht.

Die Unteransprüche beschreiben bevorzugte Ausführungsbeispiele Dabei sind die Noppenspindeln an den Enden und/oder zwischen den Enden mit herkömmlicher Verzahnung versehen, also ungenoppt bzw. nicht zahnreduziert. Überraschenderweise reduziert sich der Verschleiß dadurch erheblich.

Die Ursachen sind nicht ganz klar. Es wird die Verschleißreduzierung aber darauf zurückgeführt, dass
die genoppten Spindeln unter vergleichbaren Umständen gegenüber ungenoppten Spindeln einen geringen Biegewiderstand besitzen und
eine Auslenkung/Verformung der genoppten Spindeln in Umfangsrichtung der Zentralspindeln die Belastung der Verzahnung verursacht und damit den Verschleiß erheblich steigert.

Richtig ist, dass die Spindeln nicht nur in radialer Richtung belastet werden, wenn deren Zähne in die Verzahnung der Zentralspindel und in die Verzahnung des umgebenden Gehäuses greifen. Von dem im Extruderspalt zwischen Zentralspindel und Gehäuse befindlichen, aufzubereitenden Werkstoff geht eine zusätzliche Belastung der Planetspindeln in Umfangsrichtung aus. Diese Belastung ist umso größer, je schwieriger der Werkstoff ist. Diese Belastung würde die Planetspindeln in Umfangrichtung der Zentralspindel verformen. Mit der Normalverzahnung an den Planetspindelenden und zwischen den Enden wird den Noppenspindeln eine bessere Führung, mehr Halt in den zusammenwirkenden Extruderteilen gegeben.

Der größere Verschleiß lässt sich an den Enden ausschließlich genoppter Planetspindeln vor allem in Grenzbelastungen des Extruders beobachten, nicht jedoch zwischen den Enden. Überraschenderweise reduziert jedoch ein normal verzahnter Bereich der Planetspindeln in der Mitte zwischen den Enden gleichfalls den Verschleiß an den Enden. Das wird auf die damit verbundene Führung der Planetspindeln in deren Mitte, zurückgeführt.

In weiter Ausbildung der Erfindung sind unterschiedliche Führungsbereiche an den Enden und in der Mitte der Planetspindeln vorgesehen.

Der einzugseitige Führungsbereich hat eine Länge von maximal 5D. In diesem Bereich ist mindestens eine Länge von 2D, vorzugsweise 2,5 bis 3,5D,(Einlauf-Kernbereich genannt) normalverzahnt. D ist das Maß des Teilkreisdurchmessers der Normalverzahnung. Je nach Teilkreisdurchmesser liegt die Länge der Planetspindeln bei 300mm bis 1500mm. Das schließt ein, dass die Planetspindeln durch mehrere hintereinander angeordnete Planetwalzenmoduln erstrecken können.

Der einzugseitige Führungsbereich ist der Bereich, in dem das im Planetwalzenextruder oder Planetwalzenmodul aufzubereitende Material eingefüllt wird. Im Planetwalzenextruder verläuft die Einfüllrichtung in der Regel quer zur Extruderlängsachse. Mit Planetwalzenmodul ist ein in der Bauweise eines Planetwalzenextruders hergestellter Extruderabschnitt bezeichnet, der mit gleichen oder anderen Extruderabschnitten verbunden ist. Planetwalzenmodule werden aus den vorgeschalteten Extruderabschnitten gefüttert bzw. befüllt. Das schließt nicht aus, dass zusätzlich über einen seitlich angeordneten Extruder oder über einen zusätzlichen Einfülltrichter oder über andere Eintragsmittel Material in den Planetwalzenmodul eingetragen wird.

Bei den angegebenen Längen sind der Fräser-Einlauf- und Fräser-Auslauf für die Noppenverzahnung nicht mitgerechnet.

Bei Scheibenfräsern als Verzahnungswerkzeug ergibt sich ein Einlauf und Auslauf, der vom Durchmesser des Scheibenfräsers abhängt. Übliche Scheibenfräser benötigen einen Fräser-Einlauf und Fräser-Auslauf von mindestens 0,3 D, häufig auch mehr.

Etwas anderes gilt, wenn das Ende der Normalverzahnung am Ende der Planetspindel liegt. Dann kann ist an der Stelle keine zusätzliche Strecke für Einlauf bzw. Auslauf zu berücksichtigen.

Der austrittsseitige Führungsbereich hat eine Länge von maximal 3D. In diesem Bereich ist mindestens eine Länge von 0,5D, vorzugsweise eine Länge bis 1,5D (Austritts-Kernbereich genannt) normalverzahnt. Mit Ausnahme der Maße gelten die Ausführungen für den einfüllseitigen Führungsbereiche für den austrittseitigen Führungsbereich entsprechend.

Der mittige Führungsbereich hat eine Länge von maximal 4D. In diesem Bereich ist mindestens eine Länge von 1D, vorzugsweise 1,5D bis 2,SD(Mitten-Kernbereich genannt) normalverzahnt. Mit Ausnahme der Maße und der Möglichkeit der Kernbereichsanordnung an einem Spindelende gelten die Ausführungen für den einfüllseitigen/austrittsseitigen Führungsbereich für den mittigen Führungsbereich entsprechend.

Überdies heißt mittig vorzugsweise, dass sich beiderseits der mittigen Normalverzahnung gleiche Längen von Noppenverzahnung befinden.

In der Zeichnung sind verschiedene Ausführungsbeispiele der Erfindung dargestellt.

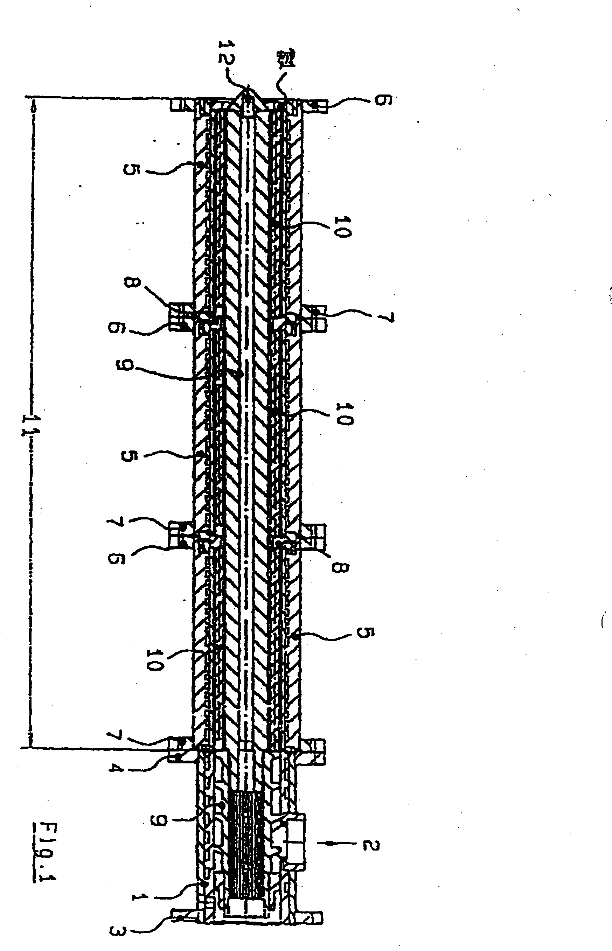

Fig. 1 zeigt einen Extruder mit einem Bereich 11. Im Bereich 11 besitzt der Extruder drei Planetwalzenteile. Jeder Planetwalzenteil besteht aus einem äußeren, innen verzahnten Gehäuse 5, aus Planetspindeln 10 und einer Zentralspindel 9. Die Zentralspindel 9 kämmt mit den Planetspindeln 10. Die Planetspindeln 10 kämmen darüber hinaus auch mit der Innenverzahnung der Gehäuse 5.

Jedes Gehäuse 5 hat die Form eines Rohres, das an beiden Enden Flansche 6 bzw. 7 aufweist. An den Flanschen 6 und 7 sind Planetwalzenteile miteinander verschraubt. Dabei werden die Gehäuse 5 durch Zentrierringe 8 zentriert. Die Zentrierringe 8 sind in entsprechenden Ausnehmungen der Gehäuseflansche eingelassen.

Zu jedem Gehäuse 5 eines Planetenteils gehört auch eine Buchse. Die Buchse sitzt innen im Gehäuse und bildet die Innenverzahnung des Gehäuses. Das heißt, für das Zusammenwirken mit den Planetspindeln sind die Buchsen innenseitig verzahnt.

Darüber hinaus dienen die Buchsen der Temperierung der Planetwalzenteilen.

Dazu sind die Buchsen außenseitig mit wendelförmig verlaufenden Kanälen für Temperierungsmittel versehen. Die Gehäuse können buchsenseitig glatt sein. Nach Montage der Buchsen in den Gehäusen werden die Kanäle in den Buchsen durch das Gehäuse geschlossen.

Das Temperierungsmittel ist im Ausführungsbeispiel Wasser, in anderen Ausführungsbeispielen Öl.

Je nach Bedarf muss das Temperierungsmittel die Gehäuse 5 kühlen oder beheizen.

Jedes Gehäuse 5 eines Planetwalzenteils ist im Ausführungsbeispiel mit einer Kühlstrecke und einer Beheizungsstrecke versehen. Zu jeder Strecke gehören spiralförmig verlaufende Kanäle, wie sie oben beschrieben sind. Im Ausführungsbeispiel sind die Kanäle zweigängig in der Buchse vorgesehen, so dass ein Kanalsystem für Beheizung und das andere Kanalsystem für die Kühlung verwendet werden kann. In anderen Ausführungsbeispielen wird das Temperierungsmittel je nach Bedarf erhitzt oder gekühlt.

Die Buchsen werden bei der Montage in die Gehäuse eingeschoben. Dabei ist eine Presspassung zwischen dem Gehäuse und der Buchse vorgesehen. Gleichwohl lässt sich die Buchse nach Erwärmung des Gehäuses leicht in das Gehäuse einschieben. Das geschieht vorzugsweise, bevor die Gehäuse mit den Flanschen 6 und 7 verschraubt werden. Die Buchsen können aber auch nach der Verschraubung der Flansche 6 und 7 eingeschoben werden. Dazu sind die Zentrierringe mit einer Bohrung versehen, die gleich der Gehäusebohrung ist.

Zwischen den Buchsen sitzt jeweils ein Anlaufring 8. Jeder Anlaufring hält die Planetspindeln 10 in axialer Richtung in ihrer Umlaufposition um die gemeinsame Zentralspindel 9. Die Planetspindeln 10 gleiten bei ihrem Umlauf an dem Anlaufring 8 entlang.

Alle Planetwalzenteile haben eine gemeinsame Zentralspindel 9.

Die Spitze der Zentralspindel ist mit 12 bezeichnet und korrespondiert mit einem Anlaufring 8 am vorderen Ende des Bereiches 11, der wie die anderen Anlaufring die Zentralspindel in einem Abstand umgibt, so dass sich ein Spalt bildet, durch den das extrudierte Material in die Extruderdüse gedrückt wird. Die Extruderdüse ist nicht dargestellt.

An dem Ende der Zentralspindel 9, welche der Spitze 12 abgewandt ist, bildet die Zentralspindel 9 eine Schnecke für eine Einlaufzone. In diesem Bereich ist ein separates Gehäuse 1 mit einer Einlauföffnung 2 vorgesehen. Das Gehäuse 1 ist aufgebaut wie das Gehäuse 5. Die zugehörigen Flansche sind mit 3 und 4 bezeichnet. Das Zusammenwirken des Flansches 4 mit dem Anschlußflansch 7 des nächsten Gehäuses 5 ist das gleiche wie das Zusammenwirken der Flansche 6 und 7. Die Füllschnecke am rechten Teil der Zentralspindel hat nur Füllfunktion, im Ausführungsbeispiel keine Plastifizierungs- und keine wesentliche Homogenisierungsfunktion.

Jedes Planetwalzenteil ist im Ausführungsbeispiel 600 mm lang, so dass eine Gesamtlänge von 1,8 m entsteht.

Alle Planetwalzenteile sind in nicht dargestellter Weise so abgestützt, dass eine für den Betrieb wesentliche Durchbiegung verhindert wird.

Jedes Planetwalzenteil besitzt 9 Planetspindeln.

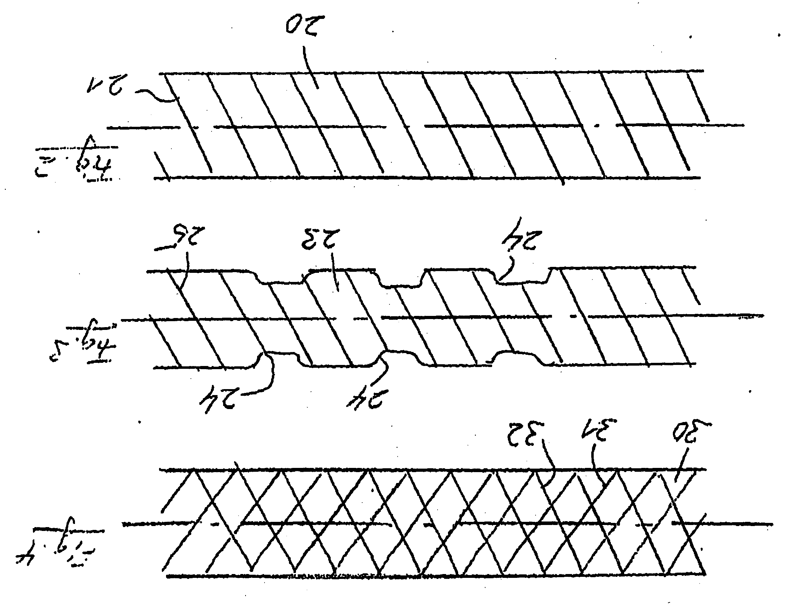

In Fig. 2 bis 4 sind verschiedene Planetspindeln schematisch dargestellt. Die Planetspindeln der Fig. 2 sind mit 20 bezeichnet und herkömmlicher Art

Der dort verwendete Rohling ist mit einer üblichen Evolventen-Verzahnung 21 versehen worden. Die Zähne der Verzahnung winden sich in einer Schraubenlinie um die Planetenspindeln herum. Günstig ist, die Verzahnung mehrgängig anzulegen. Dann winden sich gleichzeitig mehrere Zähne parallel zueinander um die Planetspindel herum.

Die Evolventenverzahnung ist im Ausführungsbeispiel mit einem Scheibenfräser in den Rohling geschnitten worden. Auch Fingerfräser können als Fräswerkzeug verwendet werden.

Fig. 3 zeigt eine Planetspindel 25 mit Igelverzahnung. Die Igelverzahnung unterscheidet sich von der Verzahnung nach Fig. 2 durch zusätzliche ringförmige Ausnehmungen 24, welche in Abständen in die Planetspindeln gefräst worden sind. Die zwischen den Ausnehmungen 24 verbliebenen Zähne werden als Igelform bezeichnet.

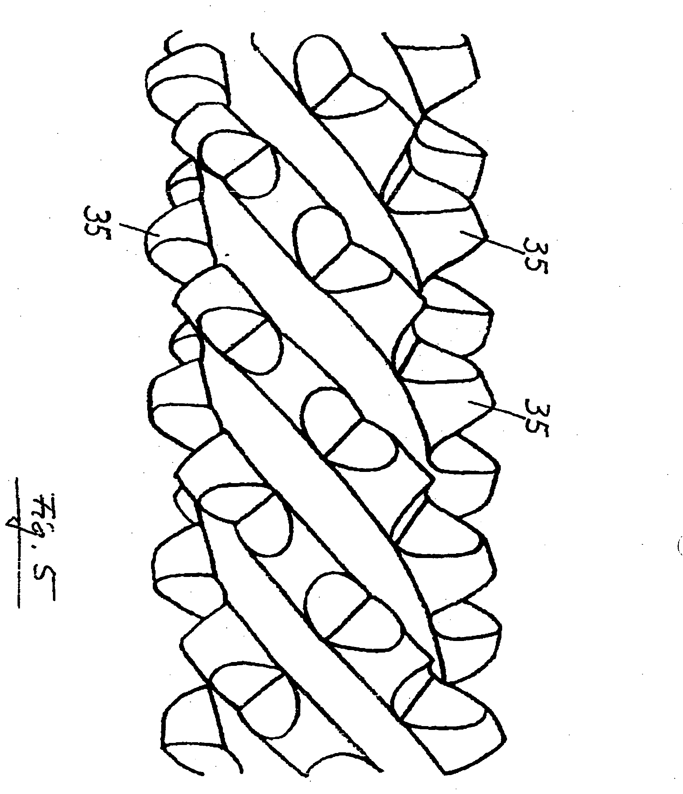

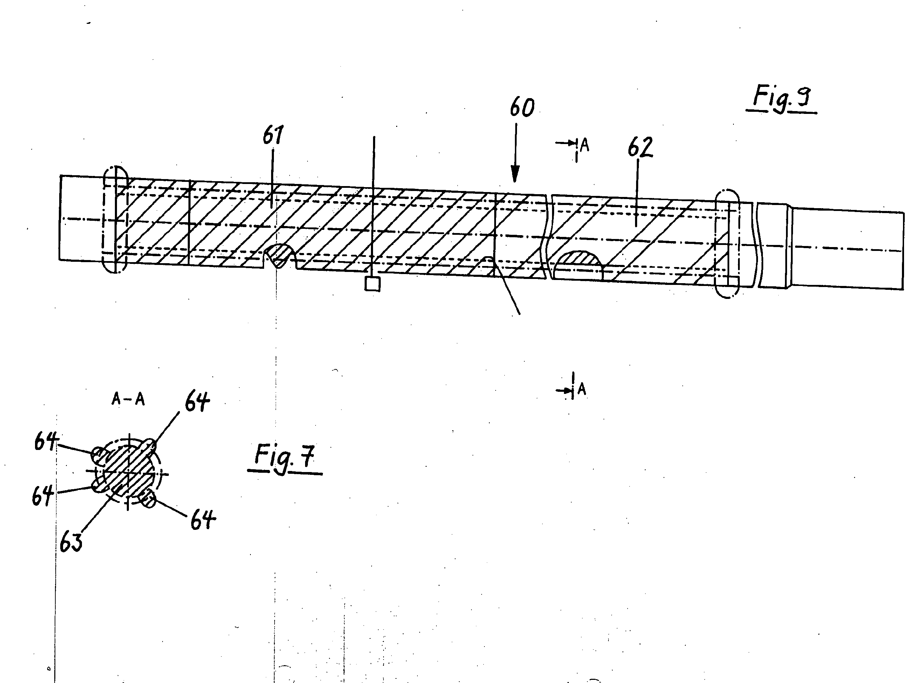

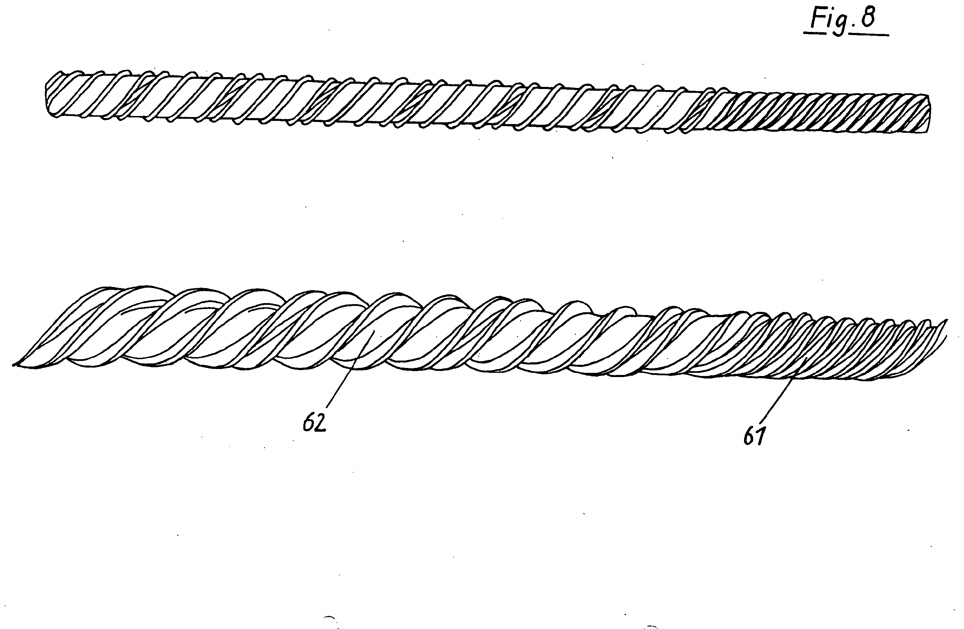

Die Fig. 4 zeigt eine schematische Darstellung einer Planetspindel 30 mit Noppenverzahnung. Dabei ist der Rohling zunächst mit der gleichen Verzahnung 32 wie die Planetspindel 20 versehen worden. Anschließend ist eine gegenläufige Verzahnung 31 in die Planetspindel geschnitten worden. Dabei beginnt der Fräsvorgang an einem Ende des Rohlings für die Planetspindel und endet der Fräsvorgang am anderen Planetspindelende. Bei der Herstellung kann der Fräsvorgang an dem anderen Ende beginnt und unter Kreuzen der ersten eingefrästen Verzahnung bis zum ursprünglichen Planetspindelende fortgesetzt werden. Im Ausführungsbeispiel ist die gegenläufige Verzahnung gleichfalls eine Evolventenverzahnung und hat die Verzahnung den gleichen Zahnmodul wie die Erstverzahnung/Normalverzahnung. Die Planetspindel nimmt dadurch die in Fig. 5 abgebildet Form an. Es entstehen noppenförmige Zähne 35 ähnlich Pyramiden mit rechteckförmiger Basis.

Im Ausführungsbeispiel nach Fig. 4 sind neun gleiche Planetspindeln zwischen der Zentralspindel und dem umgebenden Gehäuse und gleichmäßig verteilt am Umfang der Zentralspindel vorgesehen.

In anderen Ausführungsbeispielen werden die in Fig.4 dargestellten Spindeln mit anderen Spindeln kombiniert. Die unterschiedlichen Spindeln können aufweisen:
a) ganz oder teilweise eine andere gegenläufige Verzahnung
b) ganz oder teilweise eine Igelverzahnung
c) ganz oder teilweise eine herkömmliche Verzahnung

Die Zahl der anderen Spindeln wird durch versuchsweise Auswechselung optimiert.

Die Auswechselung der Planetspindeln ist am Planetwalzenextruder verhältnismäßig einfach. Dabei läßt sich durch Beurteilung des Extrusionsergebnisses kontrollieren, ob die Auswechselung zu einer Verbesserung oder Verschlechterung führt.

Wahlweise kann auch jede einzelne Spindel gleichzeitig verschiedene Verzahnung aufweisen.

Im Ausführungsbeispiel nach Fig. 3 und 4 hat die gegenläufige Verzahnung 31 eine Tiefe, die 1 mm geringer als die Tiefe der Verzahnung 32. Die Tiefe ist im Ausführungsbeispiel die Frästiefe zwischen zwei benachbarten Zähnen.

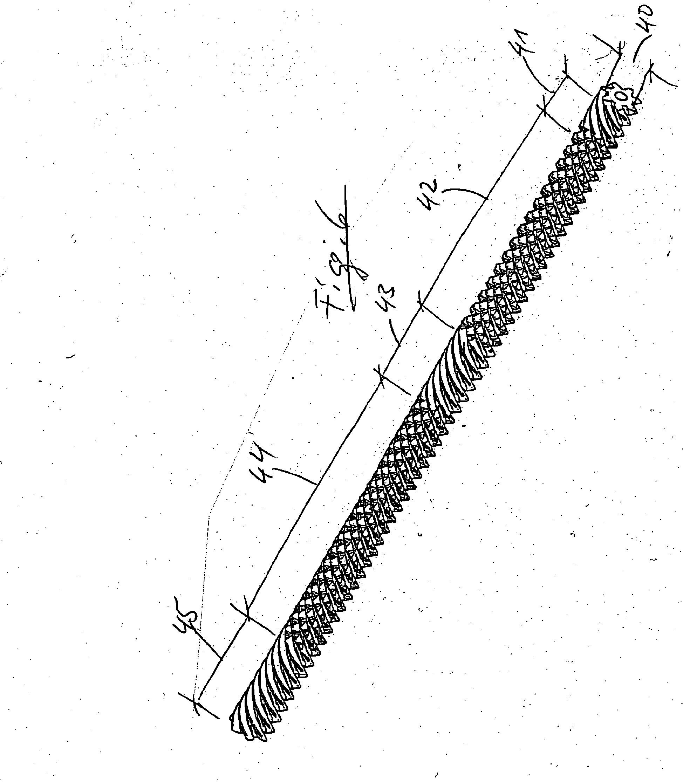

Fig. 6 zeigt eine Planetspindel mit einer Normalverzahnung und Teilen, die zugleich gegenläufig verzahnt sind. Jede Planetspindel hat einen bestimmten Teilkreisdurchmesser D, hier mit 40 bezeichnet. Ferner unterscheidet man Kopfkreisdurchmesser, Grundkreisdurchmesser, Fußkreisdurchmesser, Kopfhöhe, Fußhöhe, Teilung am Teilkreis, Zahndicke am Teilkreis. Die Planetspindel berührt mit ihrem Teilkreisdurchmesser den Teilkreisdurchmesser der Verzahnung an der Zentralspindel wie auch den Teilkreisdurchmesser der Gehäuseverzahnung.

Die Planetspindel nach Fig. 6 ist zunächst mit einer Normalverzahnung versehen worden. Von der Normalverzahnung sind drei Bereiche verblieben, ein austrittsseitiger Bereich 41, ein einfüllseitiger Bereich 45 und ein mittiger Bereich 43. Die beiden Bereiche 42 und 44 befinden sich beiderseits des mittigen Bereiches 43 und werden von den Bereichen 41 und 45 eingeschlossen.

Im Ausführungsbeispiel besitzen die einzelnen Bereiche eine Länge von
Bereich 41 = 1D
Bereich 43 = 1,5D
Bereich 45 = 2D

Die Bereiche 42 und 44 erstrecken sich über die verbleibende Länge der Planetspindel. Sie sind gleich lang und gegenläufig verzahnt. Dabei ist die gleiche Verzahnung wie bei der Normalverzahnung vorgesehen. Die gegenläufige Verzahnung hat bezogen auf einen Betrachterstandort an dem einfüllseitigen Ende jedoch einen anderen Winkel, der eine Kreuzung der beiden durch Fräsen entstehenden Ausnehmungen bewirkt. Bezogen auf einen anderen Betrachterstandort am austrittseitigen Ende kann die gegenläufige Verzahnung aber mit gleichem Winkel eingebracht werden. Die sich kreuzenden Ausnehmungen ergeben sich bei jeder Betrachtung. Das nach beiden Verzahnungen verbleibende Material der Spindel bildet die zuvor beschriebenen und dargestellten Noppen.

Die Bereiche 42 und 44 schließen auch den Einlaufweg und den Auslaufweg des Verzahnungswerkzeuges ein. Bei einem Scheibenfräser können das leicht Längen von 0,3D und mehr je Auslauf oder Einlauf sein.

Der Schutzumfang ergibt sich aus den beigefügten Ansprüchen.

Anstelle der vorstehend beschriebenen Noppen können die Planetspinden in anderen

## Patentansprüche

1. Planetwalzenextruder mit einer Zentralspindel, Planetspindeln (60) und einer innen verzahnten Gehäusebuchse bzw. einem innen verzahnten Gehäuse,
wobei die Planetspindeln (60) mit den in Richtung des Schmelzestromes hinteren Stirnflächen an einem Anlaufring gleiten,
wobei die Verzahnung wendelartig an der Zentralspindel und an den Planetspindeln (60) verläuft und wendelartig in der Gehäuesebauchse bzw. in dem Gehäuse verläuft,
wobei die Verzahnung rechtsgängig oder linksgängig verläuft,
wobei insbesondere eine Evolventenverzahnung vorgesehen ist,
wobei mindestens eine Planetspindel (60) mit einer gegenläufigen Verzahnung versehen ist, wobei der austrittseitige und der eintrittsseitige Bereich (41,45) an den Spindelenden frei von gegenläufiger Verzahnung ist,
wobei der von gegenläufiger Verzahnung freie austrittseitige Bereich (41) eine Länge von 0,5 bis 3 D und
der von gegenläufiger Verzahnung freie eintrittsseitige Bereich (45) eine Länge von 2 bis 5D besitzt, wobei D ein Teilkreisdurchmesser (40) der Planetspindel ist.

2. Planetwalzenextruder nach Anspruch 1, wobei mindestens eine der mit gegenläufiger Verzahnung versehenen Planetspindeln (60) mittig frei von gegenläufiger Verzahnung ist, wobei der von gegenläufiger Verzahnung mittige Bereich (43) eine Länge von 1 bis 4 D besitzt.

3. Planetwalzenextruder nach Anspruch 2, **dadurch gekennzeichnet, daß** der
- austrittsseitige Bereich (41) eine Länge von 1 D plus/minus 0,5 D,
- mittlere Bereich (43) eine Länge von 2 D plus/minus 0,5 D,
- eintrittsseitige Bereich (45) eine Länge von 3 D plus/minus 0,5 D besitzt.

4. Planetwalzenextruder nach einem der Ansprüche 1bis 3, **dadurch gekennzeichnet, daß** die gegenläufige Verzahnung eine andere Steigung als die ursprüngliche Verzahnung besitzt.

5. Planetwalzenextruder nach Anspruch 4, **dadurch gekennzeichnet, daß** der Steigungsunterschied bis 15 Grad beträgt.

6. Planetwalzenextruder nach Anspruch 5, **dadurch gekennzeichnet, daß** der Steigungsunterschied bis 5 Grad beträgt.

7. Planetwalzenextruder nach Anspruch 5 oder 6, **dadurch gekennzeichnet, daß** der Steigungsunterschied mindestens 1 Grad beträgt.

8. Planetwalzenextruder nach einem der Ansprüche 4 bis 7, **dadurch gekennzeichnet, daß** die Steigung der gegenläufigen Verzahnung größer als die Steigung der anderen Verzahnung ist.

9. Planetwalzenextruder nach einem der Ansprüche 1 bis 8, **dadurch gekennzeichnet, daß** die gegenläufige Verzahnung eine andere Tiefe als die ursprüngliche Verzahnung besitzt.

10. Planetwalzenextruder nach Anspruch 9, **dadurch gekennzeichnet, daß** die gegenläufige Verzahnung eine größere oder kleinere Tiefe als die ursprüngliche Verzahnung besitzt.

11. Planetwalzenextruder nach Anspruch 9 oder 10, **dadurch gekennzeichnet, daß** die gegenläufige Verzahnung eine Tiefe hat, die mindestens 10% geringer als die Tiefe der ursprüngliche Verzahnung ist.

12. Planetwalzenextruder nach einem der Ansprüche 9 bis 11, **dadurch gekennzeichnet, daß** die gegenläufige Verzahnung eine Tiefe hat, die höchstens um 90% geringer als die Tiefe der ursprünglichen Verzahnung ist.

## Claims

1. Planetary roller extruder having a central spindle, planetary spindles (60) and an internal toothed housing liner or an internal toothed housing,
wherein the planetary spindles (60)slide with the rear surfaces in the melt flow direction at a stop ring,
wherein the toothing runs helically on the central spindle and on the planetary spindles (60) and runs helically in the housing liner or in the housing,
wherein the toothing runs right-handed or left-handed
wherein particularly an involute toothing is provided,
wherein at least one planetary spindle (60) is provided with a counter-rotating toothing,
whereinthe outlet side and the inlet sideregion (41, 45) is free of counter-rotating toothing on the spindle ends,
wherein the outlet side region (41) that is free of counter-rotating toothingand the inlet side region (45) that is free of counter-rotating toothingpossess a length of 0.5 to 3D and a length of 2 to 5D respectively, wherein D is the pitch diameter (40) of the planetary spindle.

2. Planetary roller extruder according to Claim 1, wherein at least one of theplanetary spindles (60) provided with counter-rotating toothing is free of counter-rotating toothing in the middle,
wherein the middle region (43) that is free of counter-rotating toothing possesses a length of 1 to 4 D.

3. Planetary roller extruder according to Claim 2, **characterised in that**
- the region (41) at the outlet side possesses a length of 1 D plus/minus 0.5 D,
- the middle region (43) possesses a length of 2 D plus/minus 0.5 D,
- the region (45) at the inlet side possesses a length of 3 D plus/minus 0.5 D.

4. Planetary roller extruder according to one of claims1 to 3, **characterised in that** thecounter-rotating toothing possesses a pitch that differs from the original toothing.

5. Planetary roller extruder according to Claim 4, **characterised in that** thepitch difference is up to 15 degrees.

6. Planetary roller extruder according to Claim 5, **characterised in that** the pitch difference is up to 5 degrees.

7. Planetary roller extruder according to claim 5 or 6, **characterised in that** thepitch difference is at least 1 degree.

8. Planetary roller extruder according to one of claims4to 7, characterised in thatthe pitch of the counter-rotating toothing is greater than the pitch of the other toothing.

9. Planetary roller extruder according to one of claims 1 to 8, **characterised in that** the counter-rotating toothing possesses a depth that differs from the original toothing.

10. Planetary roller extruder according to Claim 9, **characterised in that** thecounter-rotating toothing possesses a greater or smaller depth than theoriginal toothing.

11. Planetary roller extruder according to claim 9 or 10, characterised in thatthe counter-rotating toothing has a depth that is at least 10% less thanthe depth of the original toothing.

12. Planetary roller extruder according to one of claims 9 to 11, **characterised in that** the counter-rotating toothing has a depth thatis at most 90% less than the depth of the original toothing.

## Revendications

1. Extrudeuse planétaire comprenant une broche centrale, des broches planétaires (60) ainsi qu'une douille de carter à denture intérieure ou un carter à denture intérieure,
dans laquelle les broches planétaires (60) glissent sur une bague de butée avec les surfaces frontales arrière dans la direction du flux de matière en fusion,
dans laquelle la denture s'étend de façon hélicoïdale sur la broche centrale et sur les broches planétaires (60) et s'étend de façon hélicoïdale à l'intérieur de la douille de carter ou à l'intérieur du carter,
dans laquelle la denture est une denture qui s'étend pas à droite ou pas à gauche,
dans laquelle la denture est en particulier une denture à développante,
dans laquelle au moins une broche planétaire (60) est pourvue d'une denture à pas en sens inverse,
dans laquelle la région côté sortie et la région côté entrée (41, 45) sont exemptes de denture à pas en sens inverse aux extrémités de la broche,
dans laquelle la région côté sortie (41) exempte de denture à pas en sens inverseprésente une longueur comprise entre 0,5 Det 3 D, et
dans laquelle la région côté entrée (45) exempte de denture à pas en sens inverse présente une longueur comprise entre 2 Det 5 D, où D est un diamètre primitif (40) de la broche planétaire.

2. Extrudeuse planétaireselon la revendication 1, dans laquelle au moins l'une des broches planétaires (60) pourvues d'une denture à pas en sens inverse est exempte de denture à pas en sens inverse en son centre, dans laquellela région centraleexempte de denture à pas en sens inverse présente une longueur comprise entre 1 Det 4 D.

3. Extrudeuse planétaireselon la revendication 2, **caractérisée en ce que** :
- la région côté sortie (41) présente une longueur qui est égale à 1 D plus ou moins 0,5 D,
- la région centrale (43) présente une longueur qui est égale à 2 D plus ou moins 0,5 D, et
- la région côté entrée (45) présente une longueur qui est égale à 3 D plus ou moins 0,5 D.

4. Extrudeuse planétaire selon l'une quelconque des revendications 1 à 3, **caractérisée en ce que** la denture à pas en sens inverse présente un pas qui est différent du pas de la denture initiale.

5. Extrudeuse planétaire selon la revendication 4, **caractérisée en ce que** la différence de pas peut atteindre 15 degrés.

6. Extrudeuse planétaireselon la revendication 5, **caractérisée en ce que** la différence de pas est au maximum de 5 degrés.

7. Extrudeuse planétaire selon la revendication 5 ou 6, **caractérisée en ce que** la différence de pas est d'au moins 1 degré.

8. Extrudeuse planétaire selon l'une quelconque des revendications 4 à 7, **caractérisée en ce que** le pas de la denture à pas en sens inverse est plus grand que le pas de l'autre denture.

9. Extrudeuse planétaire selon l'une quelconque des revendications 1 à 8, **caractérisée en ce que** la denture à pas en sens inverseprésente une profondeur qui est différente de la profondeur de la denture initiale.

10. Extrudeuse planétaire selon la revendication 9, **caractérisée en ce que** la denture à pas en sens inverse présente une profondeur qui est plus grande ou plus petite que la profondeur de la denture initiale.

11. Extrudeuse planétaire selon la revendication 9 ou 10, **caractérisée en ce que** la denture à pas en sens inverse présente une profondeur qui est inférieure d'au moins 10 % à la profondeur de la denture initiale.

12. Extrudeuse planétaire selon l'une quelconque des revendications 9 à 11, **caractérisée en ce que** la denture à pas en sens inverse présente une profondeur qui est au maximum inférieure de 90 % à la profondeur de la denture initiale.
